# EUROPEAN PATENT APPLICATION

(11) **EP 2 423 526 A1**
(43) Date of publication of application: **29.02.2012**
(21) Application number: 10766930.1
(22) Date of filing: 25.03.2010
(51) Int. Cl.: F16D 3/227, F16D 3/20

(54) **CROSS GROOVE-TYPE CONSTANT-VELOCITY UNIVERSAL JOINT**

(30) Priority: 21.04.2009 JP 2009102908
(71) Applicant: NTN Corporation, Osaka-shi, Osaka 550-0003 (JP)
(72) Inventor: FUJIO Teruaki, Iwata-shi Shizuoka 438-0037 (JP)
(74) Representative: Grünecker, Kinkeldey, Stockmair & Schwanhäusser
(86) International application number: PCT/JP2010/055165
(87) International publication number: WO 2010/122871

(57) **Abstract**

A cross groove-type constant-velocity universal joint includes an inner ring (10) having an outer circumferential surface on which ball grooves (12a, 12b) tilted in mutually opposite directions with respect to an axial line are alternately formed in a circumferential direction; an outer ring (20) having an inner circumferential surface on which ball grooves (22a, 22b) tilted in mutually opposite directions with respect to the axial line are alternately formed in the circumferential direction; a ball (30) received in an intersection of a pair of the ball groove (12a, 12b) of the inner ring (10) and the ball groove (22a, 22b) of the outer ring (20); and a cage (40) interposed between the inner ring (10) and the outer ring (20) to retain the ball (30) on the same plane. The maximum diameter of the outer circumferential surface of the inner ring (10) is greater than the minimum diameter the inner circumferential surface of the cage (40). On both end portions in the direction of width of the outer circumferential surface of the inner ring (10), spherical portions (16a, 16b) which have the centers of curvature at the positions offset by a predetermined distance across the center of width of the inner ring (10) are provided. Furthermore, the inner circumferential surface of the cage (40) is provided with a cylindrical portion (44) at a central portion in the direction of width, and spherical portions (46a, 46b) provided at both end portions, the spherical portions having the centers of curvature at the positions offset outwardly by a predetermined distance from the center of width of the cage (40).

## Description

### TECHNICAL FIELD

The present invention relates to a cross groove-type constant-velocity universal joint which is used in a power transfer system of automobiles or various types of industrial machines.

### BACKGROUND ART

Ball-type constant-velocity universal joints are composed of an inner ring as an inner joint member, an outer ring as an outer joint member, balls as a rolling member interposed therebetween, and a cage for retaining the balls. The ball-type constant-velocity universal joint is largely divided into the fixed type which allows only angular displacements between the inner ring and the outer ring, and the sliding type which enables not only angular displacements but also axial displacement. The cross groove-type constant-velocity universal joint is a kind of the sliding-type constant-velocity universal joint.

The cross groove-type constant-velocity universal joint has pairs of ball grooves of the inner ring and the outer ring, where the ball grooves are tilted in the directions opposite to each other with respect to the axial line with balls incorporated in the intersecting portions of both the ball grooves. Since this structure serves to reduce the play between the balls and the ball grooves, the cross groove-type constant-velocity universal joint is often used particularly for the drive shaft or the propeller shaft of automobiles.

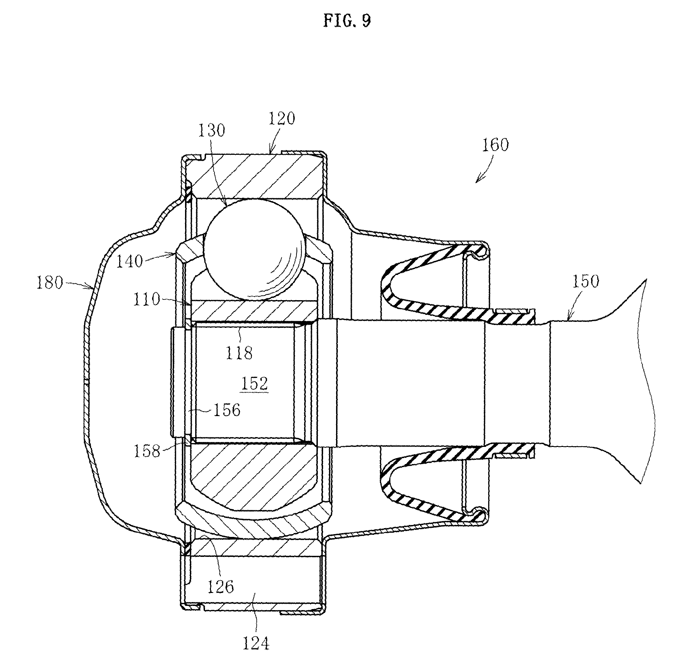

Now a description will be made to a conventional example illustrated in Fig. 9. The cross groove-type constant-velocity universal joint includes an inner ring 110 as an inner joint member, an outer ring 120 an as outer joint member, a plurality of balls 130 as a rolling member, and a cage 140 for retaining the balls 130.

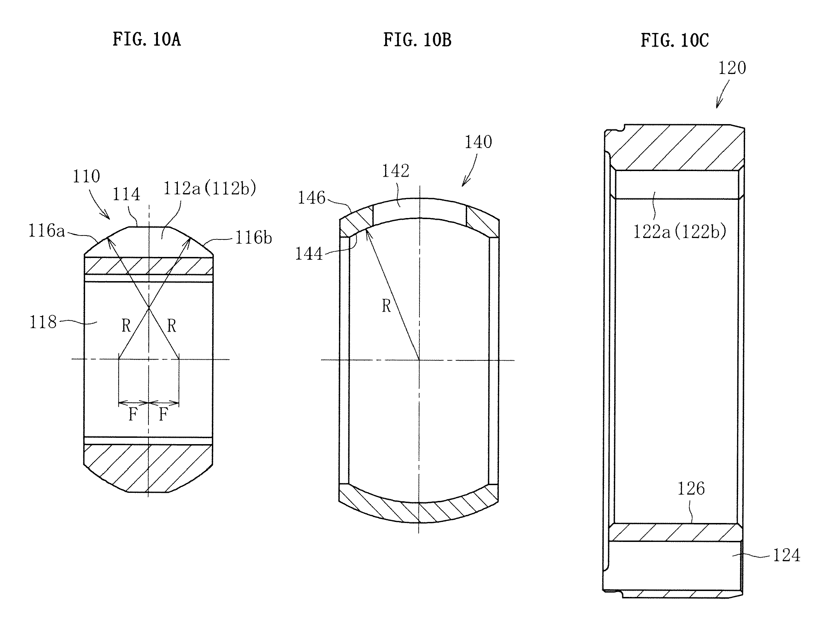

As shown in Fig. 10A, the inner ring 110 is annular in shape and has ball grooves 112a and 112b formed on the outer circumference thereof. The inner ring 110 has a spline (or serration - the same applies hereafter) hole 118, which is to be connected to a splined shaft 152 of a shaft 150 so as to be able to transmit torque. Furthermore, the inner ring 110 is fixedly positioned on the shaft 150 by installing a retaining ring 158 into an annular groove 156 formed on the shaft 150.

The inner ring 110 has an outer circumferential surface which is a convex-spherical surface, but more specifically, as shown in Fig. 10A, is composed of three portions. That is, these portions include a cylindrical portion 114 at the central portion in the direction of width, and spherical portions 116a and 116b at both end portions in the direction of width. The spherical portions 116a and 116b have the same radius of curvature, which is denoted with symbol R. The centers of curvature of the spherical portions 116a and 116b are located on the axial line of the inner ring 110 across the center of the width thereof. The amount of offset of each center of curvature from the center of the width is indicated with symbol F.

As shown in Fig. 10C, the outer ring 120, which is also annular in shape, has ball grooves 122a and 122b formed on the inner circumference thereof. The outer ring 120 has a plurality of through holes 124 that are formed at equal intervals in the circumferential direction to allow bolts to pass therethrough. The outer ring 120 has an inner circumferential surface 126 of a cylindrical shape.

The ball grooves 112a and 112b of the inner ring 110, which are adjacent to each other, are tilted in the opposite directions with respect to the axial line of the inner ring 110. The ball grooves 122a and 122b of the outer ring 120, which are adjacent to each other, are also tilted in the opposite directions with respect to the axial line of the outer ring 120. A pair of the ball groove 112a of the inner ring 110 and the ball groove 122a of the outer ring 120 or a pair of the ball groove 112b of the inner ring 110 and the ball groove 122b of the outer ring 120 is also tilted in the opposite directions. In between a pair of the ball grooves of the inner ring 110 and the outer ring 120, one ball 130 is incorporated for each pair.

As shown in Fig. 10B, the cage 140 has a plurality of pockets 142 which are disposed at predetermined intervals in the circumferential direction. The pocket 142 receives the ball 130, and extends through the cage 140 in the radial direction. As shown in Fig. 10B, the cage 140 has an inner circumferential surface 144 and an outer circumferential surface 146 which are formed in the shape of concentric spheres, with the radius of curvature of the inner circumferential surface 144 being denoted with symbol R. The center of curvature of the inner circumferential surface 144 and the outer circumferential surface 146 of the cage 140 is located on the axial line of the cage 140 and agrees with the center of width of the cage 140.

To prevent leakage of lubricating grease and entry of foreign matter, the joint is typically used with a boot 160 attached thereto. The outer ring 120 is provided, on the end face thereof opposite to the boot 160, with an end plate 180.

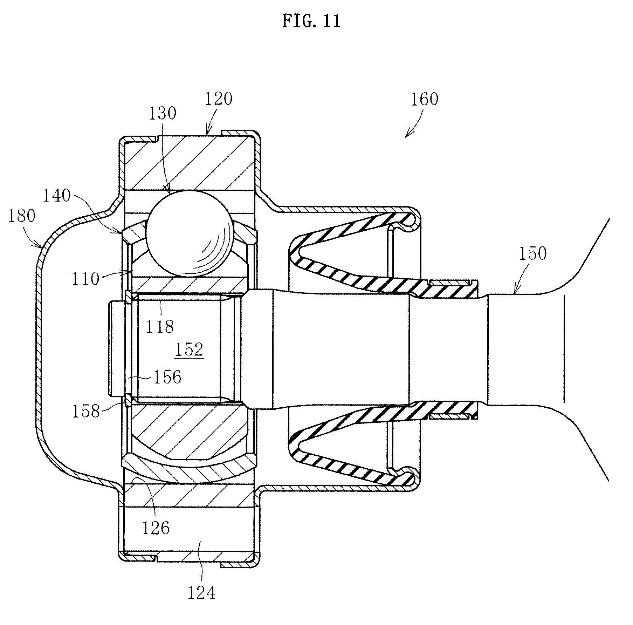

The cross groove-type constant-velocity universal joint is classified into two types according to the difference in the stopper for restricting axial displacements: the floating type and the non-floating type. The floating type draws on the interference between the inner ring 110 and the cage 140 to restrict axial displacements. That is, as shown in Fig. 11, the maximum outer diameter of the inner ring 110 is set to be greater than the minimum inner diameter of the cage 140 to allow the interference between the inner ring 110 and the cage 140 to restrict axial displacements.

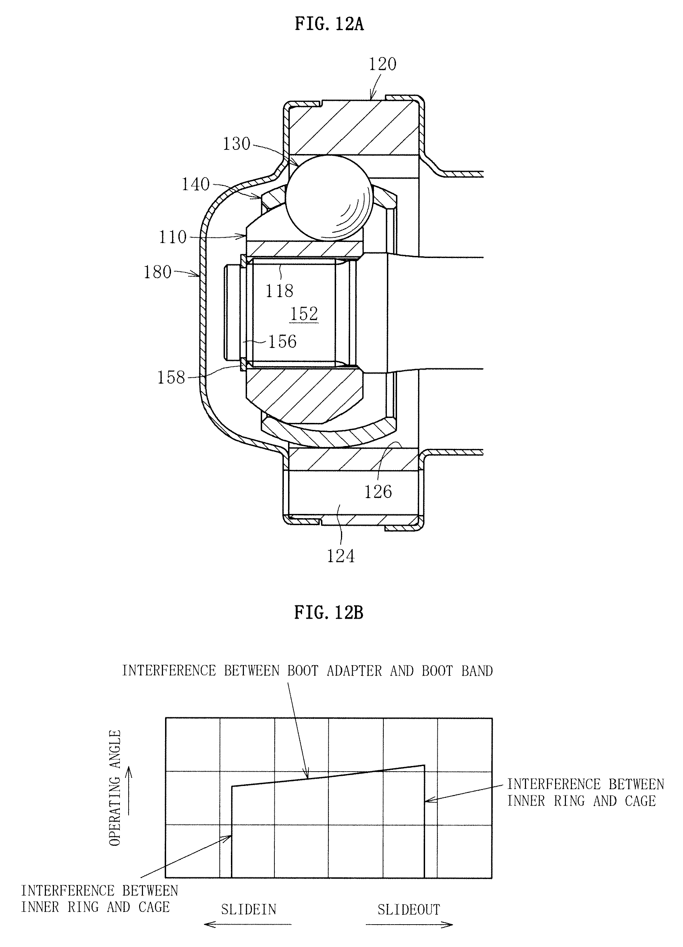

Fig. 12A shows the inner ring 110 which has moved from the neutral position shown in Fig. 11 to the left of the figure, so that the outer circumferential surface of the inner ring 110 has been brought into contact with the inner circumferential surface of the cage 140. The constant-velocity universal joint is configured such that the ball sits on the "bisected plane" all the time. Therefore, an axial movement of the inner ring by two relative to the outer ring 120 causes the cage 140 to move by one in the same direction. Then, the cage 140 and the inner ring 110 cannot move in that direction in the event of interference therebetween.

Fig. 12B is a view referred to as a slide diagram, where the "slidein" on the horizontal axis means the operation of pushing in the shaft toward the end plate, in the case of which the interference between the inner ring and the cage restricts axial displacements. On the other hand, the "slideout" means the operation of pulling out the shaft toward the boot, where the interference between the inner ring and the cage restricts axial displacements. The vertical axis represents the "operating angle", where an interference between the boot adapter and the boot band (the position at which the boot of the shaft is attached) causes no more axial displacements nor angular displacements.

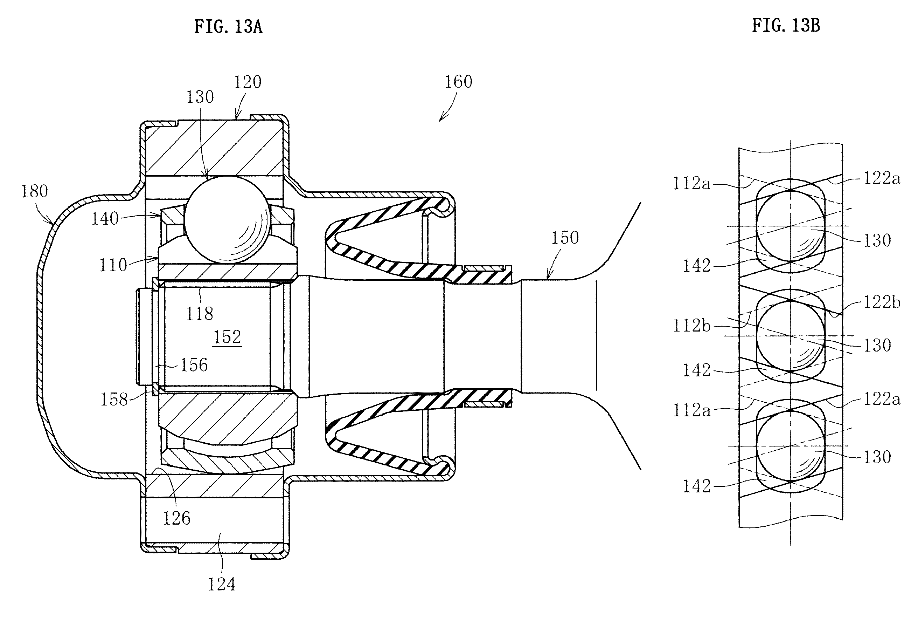

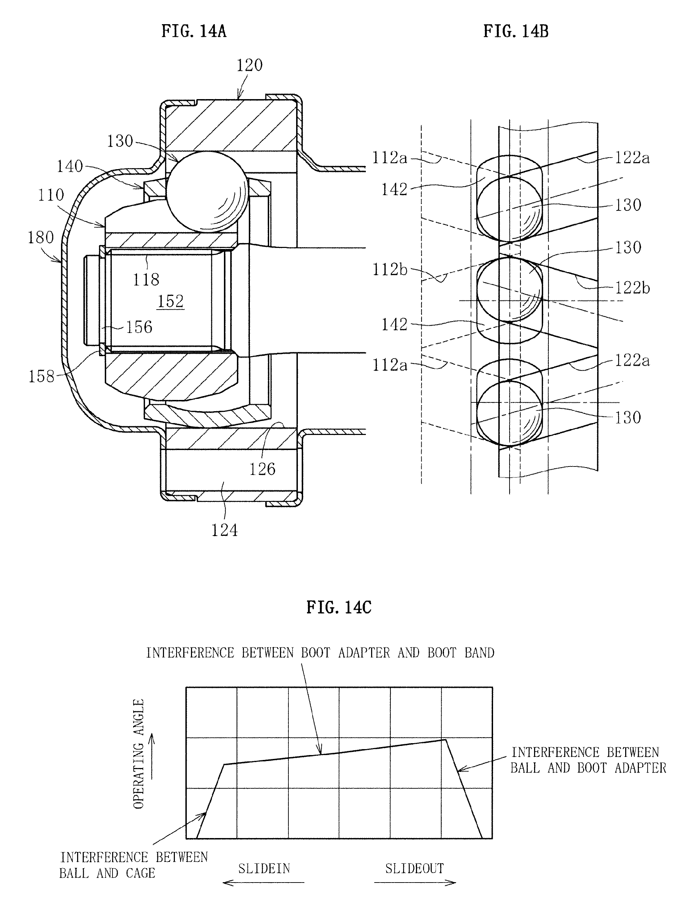

On the other hand, as shown in Figs. 13A, 13B, 14A, and 14B, the non-floating-type is configured such that the maximum outer diameter of the inner ring 110 is set to be smaller than the minimum inner diameter of the cage 140 so as to ensure a large amount of axial displacement, with the interference between the balls 130 and the cage 140 restricting axial displacements. Since the ball grooves are tilted, an axial movement of the ball 130 causes the ball 130 to move also in the circumferential direction, as shown in Fig. 14B. For a movement over the maximum stroke during slidein, the ball 130 moves within the cage pocket 142 in the circumferential direction to interfere with a pillar portion. Since the cross groove-type constant-velocity universal joint is configured such that adjacent ball grooves are tilted in the opposite directions, the ball's interference occurs across the pillar portion disabling any more movement of the ball. When the ball 130 cannot move in the circumferential direction, the ball 130 also cannot move in the axial direction at the same time. In this manner, axial displacements are restricted. Note that as can be seen from Fig. 14A, the restriction of axial displacement caused by the interference between the ball and the cage occurs only during slidein. During slideout, the interference between the ball 130 and the boot adapter restricts axial displacements. Fig. 14C shows a slide diagram similar to that of Fig. 12B mentioned above. The "interference between the ball and the cage" in this slide diagram shows that the ball 130 moves in the circumferential direction to interfere with the pillar portion of the cage 140 and thus can move no more.

Conventionally, the joint of a typical type employed six balls. However, the cross groove-type constant-velocity universal joints suggested in Patent Literatures 1 and 2 employed ten balls. This allows the maximum operating angle not to be reduced even in the event of a large amount of axial displacement (slide stroke). The joints suggested can be collapsed smoothly and are provided with an improved constant-velocity property and a higher performance.

### PRIOR ART LITERATURE

### PATENT LITERATURE

[Patent Literature 1] Japanese Patent Application Laid-Open No. 2006-266423
[Patent Literature 2] Japanese Patent Application Laid-Open No. 2006-266424

### SUMMARY OF THE INVENTION

### PROBLEMS TO BE SOLVED BY THE INVENTION

When compared with those that employ six balls, the cross groove-type constant-velocity universal joint with ten balls can employ an increased number of balls by reducing the balls in diameter. The joint can thus be made compact without reducing the load capacitance as well as improved in constant-velocity property. However, in the case of the floating type which draws on the interference between the inner ring and the cage to restrict axial displacements, employing the same design as that of the six-ball joint causes a problem that the load capacitance is significantly reduced when the ball moved to the end of the ball groove.

The conventional cross groove-type constant-velocity universal joint with six balls is configured such that the center of the spherical portion of the outer circumferential surface of the inner ring is offset in the axial direction in order to ensure a predetermined slide stroke. Since the amount of offset is determined according to the slide stroke, the amount of offset needs to be increased to provide an increased slide stroke. The type utilizing ten balls has a ball groove reduced in depth as a whole since the ball has a reduced diameter. Accordingly, with the same offset setting as that of the conventional cross groove-type constant-velocity universal joint, the ten-ball type may have a considerably shallow ball groove at the end portions of the inner ring, significantly reducing the load capacitance.

It is therefore an object of the present invention to improve the load capacitance of a floating cross groove-type constant-velocity universal joint which restricts axial displacements by the interference between the inner ring and the cage.

### MEANS FOR SOLVING THE PROBLEMS

According to the present invention, the spherical portion of the outer circumferential surface of the inner ring is offset at the center in the axial direction in the same manner as conventionally done; however, the amount of offset is reduced to ensure the depth of the ball groove at both end portions of the inner ring. This serves to improve load capacitance. But, if left as it is, the slide stroke cannot be sufficiently ensured. Thus, the spherical center of the inner circumferential surface of the cage is axially offset in the direction opposite to the offset of the center of the spherical portion of the inner ring, thereby ensuring generally the same amount of slide stroke as in the conventional type.

That is, the cross groove-type constant-velocity universal joint of the invention includes: an inner ring having an outer circumferential surface on which ball grooves tilted in mutually opposite directions with respect to an axial line are formed alternately in the circumferential direction; an outer ring having an inner circumferential surface on which ball grooves tilted in mutually opposite directions with respect to the axial line are formed alternately in the circumferential direction; a plurality of balls each incorporated in an intersection of a pair of the ball groove of the inner ring and the ball groove of the outer ring; and a cage interposed between the inner ring and the outer ring to retain the balls in a same plane. Here, a maximum diameter of the outer circumferential surface of the inner ring is greater than a minimum diameter of the inner circumferential surface of the cage. Both end portions of the outer circumferential surface of the inner ring in a direction of width are provided with spherical portions which have a center of curvature at positions offset by a predetermined distance across the center of width of the inner ring. Additionally, the inner circumferential surface of the cage is provided with a cylindrical portion at the central portion in a direction of width and spherical portions at both end portions, the spherical portions having a center of curvature at positions offset outwardly by a predetermined distance from the center of width of the cage.

As used herein concerning the offset of the center of curvature of the spherical portion of the inner ring, the expression "across the center of width of the inner ring" can be rephrased as "away from the spherical portion starting from the center of width of the inner ring." On the other hand, concerning the offset of the center of curvature of the spherical portion of the cage, the expression "outwardly from the center of width of the cage" can be rephrased as "toward the end face of the cage starting from the center of width of the cage.

The spherical portions at both end portions of the inner ring have the centers of curvature at positions offset by a predetermined distance across the center of width of the inner ring, with the distance from the center of width to the center of curvature, i.e., the amount of offset reduced when compared with the conventional amount of offset. This allows the grooves of the inner ring at both end portions to be increased in depth as compared to conventional ones even in the case of the same radius of curvature. In this manner, the depth of the ball groove at both end portions of the inner ring is ensured.

More specifically, for the constant-velocity universal joint of the same size and the same amount of sliding, the amount of offset is desirably set to 50% to 80% of the conventional amount of offset. If the amount of offset exceeds 80% of the conventional amount of offset, then there occurs a problem that the ball groove is reduced in depth at both end faces, leading to a shortage in load capacitance. Conversely, if the amount of offset is less than 50% of the conventional amount of offset, the inner diameter of the cage needs to be increased in order to ensure the amount of sliding. As a result, there is the problem in which the cage is reduced in thickness and the strength is lowered.

The inner circumferential surface of the cage is composed of three portions, i.e., the cylindrical portion at the central portion in the direction of width and the spherical portions at both end portions. This allows for increasing the central pillar portion of the cage to be increased in thickness when compared with the conventional case in which the inner circumferential surface is formed of a concave spherical surface that is concentric with the outer circumferential surface.

The number of balls is arbitrary. More specifically, the number may be 10, 8, or 6, for example. That is, even for the number of balls being 6 or 8, the joint can be designed in the same manner to provide the same effect. Nevertheless, the number of balls being 6 or 8 may cause a demerit such as an increase in the weights of the inner ring and the cage when compared with the number of balls being 10. Thus this point needs to be separately addressed.

The intersection angle of the axial line of the inner ring and the ball groove as well as the intersection angle of the axial line of the outer ring and the ball groove vary according to the number of balls. Preferably, the angle may be 4° to 10° for the number of balls being 10, 6° to 15° for the number of balls being 8, and 8° to 20° for the number of balls being 6. Angles of intersection less than the range of these angles cause a problem that the joint cannot be collapsed smoothly and the constant-velocity property is degraded. Conversely, with the angle of intersection greater than the aforementioned range, the adjacent ball grooves intersect each other, ruining the function of the joint.

The cross groove-type constant-velocity universal joint of the invention can be employed, for example, for the propeller shaft or the drive shaft of automobiles. Since the structure of the cross groove-type constant-velocity universal joint provides reduced play between the ball and the ball groove, the joint may be preferably used as the drive shaft or the propeller shaft of automobiles which refuse rattling.

### EFFECTS OF THE INVENTION

According to the invention, the depth of the ball groove is ensured at both end portions of the inner ring, and thus the durability is improved and the load capacitance will never be reduced. That is, since the cross groove-type constant-velocity universal joint has a ball groove with the groove bottom aligned in parallel to the axial line, the depth of the ball groove of, for example, the inner ring is determined according to the shape of the outer circumferential surface of the inner ring. According to the invention, the spherical portion at both end portions of the inner ring has the center of curvature at the position offset by a predetermined distance across the center of width of the inner ring. This allows the distance from the center of width to the center of curvature, i.e., the amount of offset to be reduced when compared with the conventional one. As a result, even for the same radius of curvature, the groove depth at both end portions of the inner ring is increased as compared to the conventional one. In this manner, the depth of the ball groove can be ensured at both end portions of the inner ring.

Furthermore, the inner circumferential surface of the cage is formed of a cylindrical portion at the central portion in the direction of width and the spherical portions on both sides thereof. The center of curvature of the spherical portions is axially offset to provide the cylindrical portion at the central portion in the direction of width. This allows for ensuring the thickness T of the central pillar portion of the cage, thus providing the effect of improving the strength of the cage.

### BRIEF DESCRIPTION OF THE DRAWINGS

Fig. 1A is a cross sectional view of an inner ring;
Fig. 1B is a cross sectional view of a cage;
Fig. 1C is a cross sectional view of an outer ring;
Fig. 2 is a longitudinal sectional view of a cross groove-type constant-velocity universal joint according to an embodiment;
Fig. 3 is a developed view of a ball groove;
Fig. 4 is a cross sectional view of a ball groove;
Fig. 5A is a half cross sectional view of an inner ring according to an embodiment;
Fig. 5B is a perspective view of an inner ring according to an embodiment;
Fig. 6A is a half cross sectional view of a comparative inner ring;
Fig. 6B is a perspective view of a comparative inner ring;
Fig. 7A is a cross sectional view of a cage according to an embodiment;
Fig. 7B is a cross sectional view of a cage according to a conventional example;
Fig. 8A is a longitudinal sectional view illustrating the state at the stroke end of a conventional example;
Fig. 8B is a longitudinal sectional view illustrating the state at the stroke end of an embodiment;
Fig. 9 is a longitudinal sectional view of a conventional cross groove-type constant-velocity universal joint;
Fig. 10A is a cross sectional view of the inner ring of Fig. 9;
Fig. 10B is a cross sectional view of the cage of Fig. 9;
Fig. 10C is a cross sectional view of the outer ring of Fig. 9;
Fig. 11 is a longitudinal sectional view of a floating cross groove-type constant-velocity universal joint;
Fig. 12A is a longitudinal sectional view illustrating the state at the stroke end;
Fig. 12B is a diagram illustrating an interference state by taking into account the operating angle;
Fig. 13A is a longitudinal sectional view of a non-floating cross groove-type constant-velocity universal joint;
Fig. 13B is a developed view of the ball groove of Fig. 13A;
Fig. 14A is a longitudinal sectional view illustrating the state at the stroke end;
Fig. 14B is a developed view of the ball groove of Fig. 14A; and
Fig. 14C is a diagram illustrating an interference state by taking into account the operating angle.

### MODE FOR CARRYING OUT THE INVENTION

Now, a description will be made to an embodiment of the present invention applied to a propeller shaft with reference to the drawings which illustrate the embodiment.

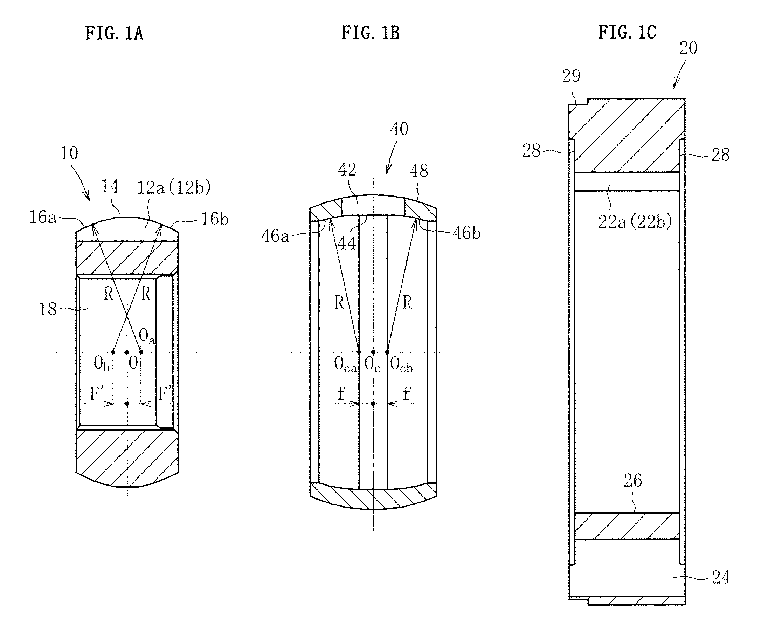

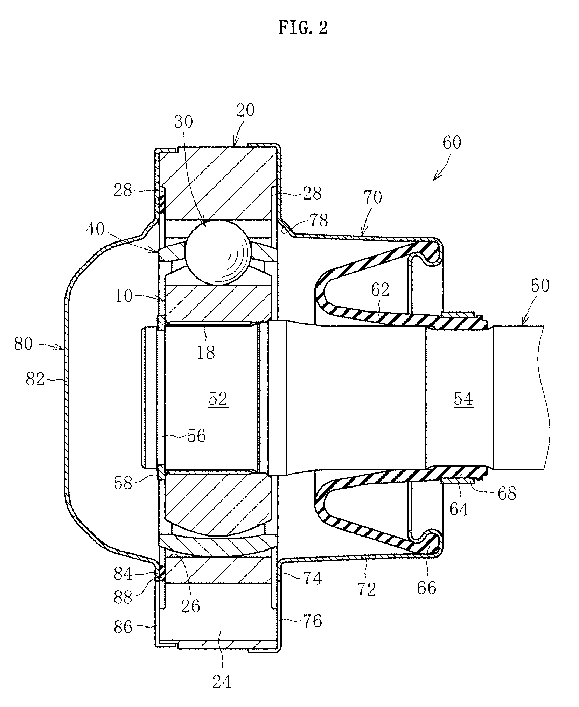

Figs. 1A, 1B, and 1C illustrate the individual components of the cross groove-type constant-velocity universal joint shown in Fig. 2. As shown in Fig. 2, the cross groove-type constant-velocity universal joint includes an inner ring 10 as an inner joint member, an outer ring 20 as an outer joint member, a plurality of balls 30 as a rolling member, and a cage 40 for retaining the balls 30. The inner ring 10 is connected to a driving shaft or a driven shaft and the outer ring 20 is connected to a driven shaft or a driving shaft, thereby transmitting torque while allowing angular and axial displacements between the shafts (the sliding-type constant-velocity universal joint).

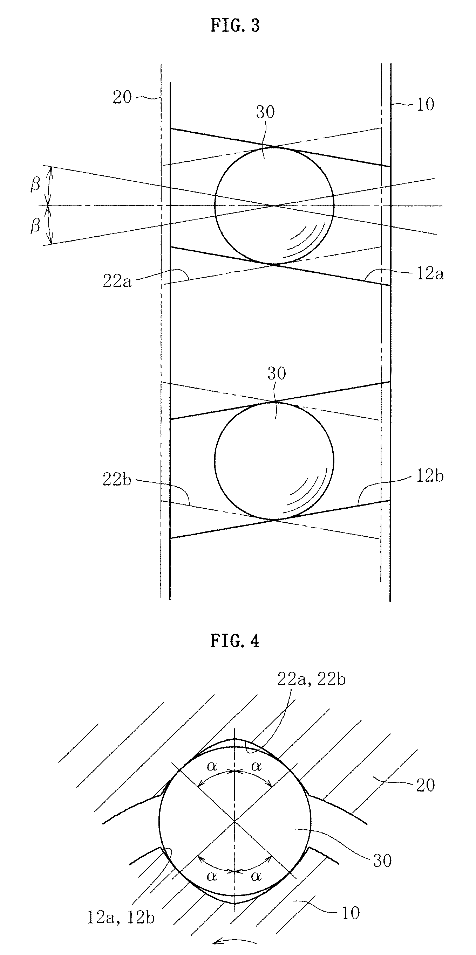

As shown in Fig. 1A, the inner ring 10 has a ring shape, and ball grooves 12a and 12b formed on the outer circumference. As shown in Fig. 1C, the outer ring 20 also has a ring shape, and ball grooves 22a and 22b formed on the inner circumference. Fig. 3 is a developed view of the ball groove with the solid lines representing the ball grooves 12a and 12b of the inner ring 10 and with the chain double-dashed lines representing the ball grooves 22a and 22b of the outer ring 20. As illustrated, the ball grooves 12a and 12b of the inner ring 10 are tilted in the directions opposite to each other with respect to the axial line of the inner ring 10 and disposed alternately in the circumferential direction. The ball grooves 24a and 24b of the outer ring 20 are tilted in the directions opposite to each other with respect to the axial line of the outer ring 20 and disposed alternately in the circumferential direction. The intersection angle of each of the ball grooves 12a, 12b, 22a, and 22b to the axial line is denoted by symbol β.

One ball 30 is incorporated in the intersection of a pair of the ball groove 12a of the inner ring 10 and the ball groove 22a of the outer ring 20 or a pair of the ball groove 12b of the inner ring 10 and the ball groove 22b of the outer ring 20. In this embodiment, the inner ring 10 has ten ball grooves 12a and 12b and the outer ring 20 has ten ball grooves 22a and 22b, so that the number of the balls 30 is also ten. The intersection angle β varies according to the number of balls 30, and more specifically, the angle is preferably 4° to 10° for the number of balls 30 being 10, 6° to 15° for the number of balls 30 being 8, and 8° to 20° for the number of balls 30 being 6.

As shown in Fig. 4, the ball grooves 12a, 12b, 22a, and 22b of the inner ring 10 and the outer ring 20 have generally the shape of a Gothic arch or an ellipse in cross section, and the relationship between the ball 30 and the ball grooves 12a, 12b, 22a, and 22b is established by angular contact. In Fig. 4, the contact angle is denoted with symbol α.

The inner ring 10 has an outer circumferential surface which is a convex-spherical surface and more specifically, composed of three portions. That is, the portions include a cylindrical portion 14 at the central portion in the direction of width and spherical portions 16a and 16b at both end portions in the direction of width. The spherical portions 16a and 16b have the same radius of curvature, which is denoted by symbol R. The spherical portions 16a and 16b have centers of curvature Oa and Ob, which are located on the axial line of the inner ring 10 across the center of width O. The centers of curvature Oa and Ob are offset from the center of width O by an amount of offset, which is denoted by symbol F'. As used herein, "across the center of width of the inner ring 10" can be rephrased as "away from the spherical portion starting from the center of width of the inner ring 10."

To ensure the depth of the ball grooves 12a and 12b at both end portions of the inner ring 10, the amount of offset F' is set to be less than the amount of offset F (Fig. 10A) of the conventional type. Since the cross groove-type constant-velocity universal joint has the ball grooves 12a and 12b of which groove bottom is parallel to the axial line, the depth of the ball grooves 12a and 12b of the inner ring 10 is determined by the shape of the outer circumferential surface of the inner ring 10. Accordingly, the end portions of the inner ring 10 are provided with the spherical portions 16a and 16b which have the centers of curvature Oa and Ob located at the positions offset by a predetermined distance (F') across the center of width O of the inner ring 10. This allows the distance from the center of width O to the centers of curvature Oa and Ob, i.e., the amount of offset F' to be reduced as compared to the amount of offset F (Fig. 10A) of the conventional type. As a result, even with the same radius of curvature R, the inner ring 10 has at both end portions a groove depth deeper than that of the conventional type.

The ball groove can be finished by machining such as grinding or quenched steel cutting. Especially, the quenched steel cutting refers to cutting using a high-hardness tool such as CBN after quenching, allowing dry cutting without any coolant. Accordingly, the quenched steel cutting has the advantages over the grinding, for example, that the cutting is carried out after quenching resulting in less deformation due to heat treatment and thus a high dimensional accuracy, shortens the cycle time and thus reduces manufacturing costs, and reduces environmental loads.

As shown in Fig. 1B, the cage 40 has a plurality of pockets 42 which are disposed at predetermined intervals in the circumferential direction. The pocket 42 is to receive the ball 30 and penetrates the cage 40 in the radial direction. The cage 40 has an inner circumferential surface which is concave-spherical and more specifically is composed of three portions. That is, the portions include a cylindrical portion 44 at the central portion in the direction of width and spherical portions 46a and 46b at both end portions in the direction of width. The spherical portions 46a and 46b have the same radius of curvature, which is denoted with symbol R. The centers of curvature Oca and Ocb of the spherical portions 46a and 46b are located on the axial line of the cage 40 and offset from the center of width Oc in the directions opposite to each other, with the amount of offset being denoted by symbol f. As used herein, the expression "outward from the center of width of the cage" can be rephrased as "toward the edges at which the spherical portion (46a or 46b) is located, starting from the center of width Oc of the cage 40." The outer circumferential surface 48 of the cage 40 is (part of) a convex-spherical surface, the center of curvature of which is located on the axial line of the cage 40 to agree with the center of width Oc of the cage 40.

The inner ring 10 has a spline hole 18 and is fixedly positioned on a shaft 50 by inserting a splined shaft 52 of the shaft 50 into the spline hole 18 and then installing a retaining ring 58 in an annular groove 56 formed on the shaft 50.

To prevent leakage of lubricating grease and entry of foreign matter, the joint is typically used with a boot 60 attached thereto. As used herein, the boot 60 is composed of a boot body 62 and a boot adapter 70. The boot body 62 has a U-shaped loop portion of one-crest type which is formed of a flexible material such as rubber. The boot body 62 has a reduced-diameter end 64, which is fitted over a boot groove 54 of the shaft 50 and then fixedly fastened with a boot band 68. The boot body 62 has an increased-diameter end 66 which is fixedly accommodated in the top edge cavity of a cylindrical portion 72 of the boot adapter 70 that is made of metal. The cylindrical portion 72 of the boot adapter 70 is provided at the proximal end portion thereof with a flange portion 74 that extends in the radial direction, where the flange portion 74 is caused to abut against the end face of the outer ring 20. The flange portion 74 is provided with a plurality of through holes 76 for allowing the aforementioned bolts to pass therethrough. The outer circumference rim of the flange portion 74 is bent in the shape of a cylinder and fitted over the outer circumferential surface of the outer ring 20. The boot adapter 70 is provided with a concave spherical portion 78 in phase with the ball grooves 22a and 22b of the outer ring 20 so as to prevent interference with the ball 30.

The outer ring 20 is provided with a plurality of through holes 24 at equal intervals in the circumferential direction to allow fastening bolts to pass therethrough. The inner circumferential surface 26 of the outer ring 20 is cylindrical in shape. The outer ring 20 is provided with an end plate 80 on the end face opposite to the boot adapter 70. The end plate 80 is composed of a projected portion 82 and a flange portion 84, with the flange portion 84 installed in contact with the end face of the outer ring 20. The outer circumference rim of the flange portion 84 is bent so as to be fitted over the outer circumferential surface of the outer ring 20. The flange portion 84 of the end plate 80 is also provided with a plurality of through holes 86 for allowing bolts to pass therethrough.

The end faces of the outer ring 20 are provided with recessed portions 28, where one recessed portion 28 and the flange portion 74 of the boot adapter 70 as well as the other recessed portion 28 and the flange portion 84 of the end plate 80 have an O-ring or a packing 88 interposed therebetween.

The outer circumference portion of the outer ring 20 near the end face of the end plate 80 side is provided with a reduced-diameter shoulder portion 29 (Fig. 1C), where the outer circumference rim of the flange portion 84 of the end plate 80 is bent to be fitted over the reduced-diameter shoulder portion 29. Although not illustrated, for example, with the companion flange of a propeller shaft placed on the flange portion 84 of the end plate 80, a bolt is allowed to pass through the companion flange, the end plate 80, the outer ring 20, and the through holes 86, 24, and 76 of the boot adapter 70 and then fastened with a nut.

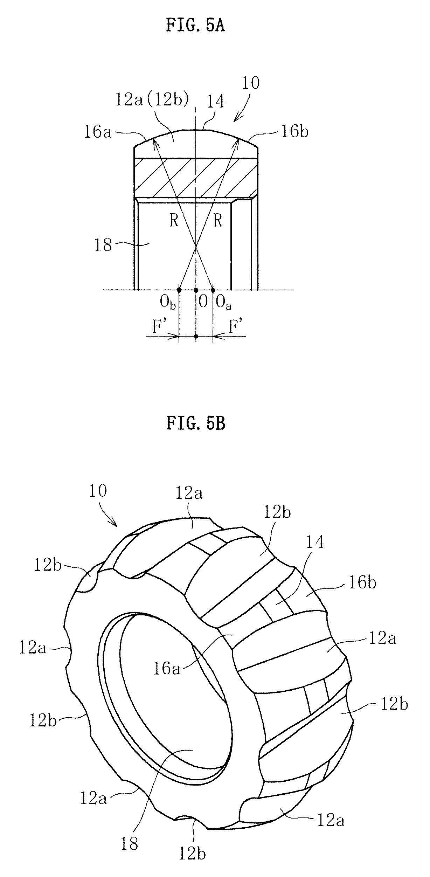

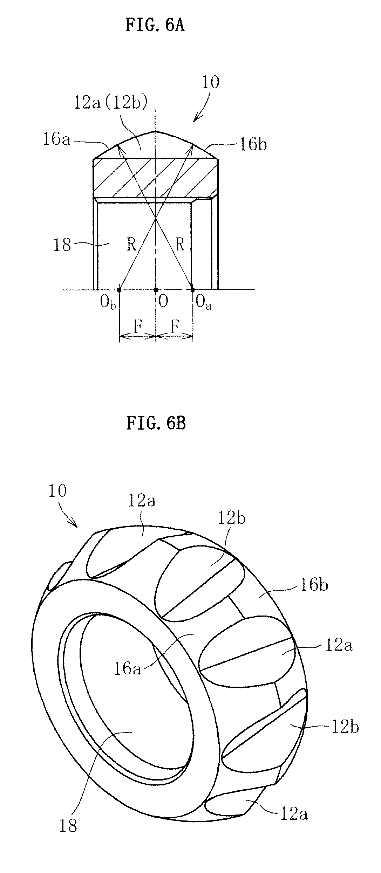

Fig. 5A is equivalent to Fig. 1A, and Fig. 5B is a perspective view illustrating the inner ring 20 shown in Fig. 1A. Figs. 6A and 6B are views of an inner ring according to a comparative example in contrast to that of Figs. 5A and 5B, with the same reference symbols employed for contrasting purposes. As can be seen clearly by contrasting Fig. 5A with Fig. 6A, the amount of offset F of the comparative example is greater than the amount of offset F' of the embodiment (F' < F). As a result, the inner ring 10 of the comparative example has an outer circumferential surface which is composed of two spherical portions and a ball groove 12a (12b) which is abruptly reduced in depth at both end portions of the inner ring 10. That is, a reduction in the amounts of offset F' (Fig. 5A) can ensure an increase in the groove depth at both end portions of the inner ring 10.

For the constant-velocity universal joint of the same size and the same amount of sliding, the amount of offset F' is desirably set to 50% to 80% of the conventional amount of offset F. If the amount of offset F' is greater than 80% of the conventional amount of offset F, the ball groove is reduced in depth at both end faces (see Figs. 6A and 6B), leading to a shortage in load capacitance. Conversely, if the amount of offset F' is less than 50% of the conventional amount of offset F, the inner diameter of the cage needs to be increased in order to ensure the amount of sliding, resulting in the cage being reduced in thickness and the strength being lowered.

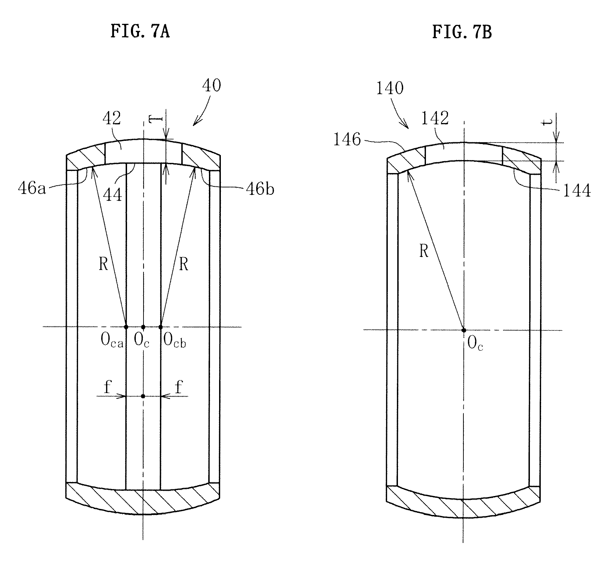

Figs. 7A and 7B are shown in contrast to each other, with Fig. 1B and Fig. 10B illustrated to the equal scale. The cage 40 shown in Fig. 7A according to the embodiment has the inner circumferential surface which is composed of the cylindrical portion 44 and the spherical portions 46a and 46b, whereas the cage 140 shown in Fig. 7B of the conventional example has the inner circumferential surface 144 which is a concave spherical surface concentric with the outer circumferential surface. The cage 40 according to the embodiment is provided with the cylindrical portion at the center in the direction of width, thereby allowing the thickness T of the central pillar portion of the cage 40 to be greater than the thickness t of the pillar portion of the cage 140 of the conventional example (T > t).

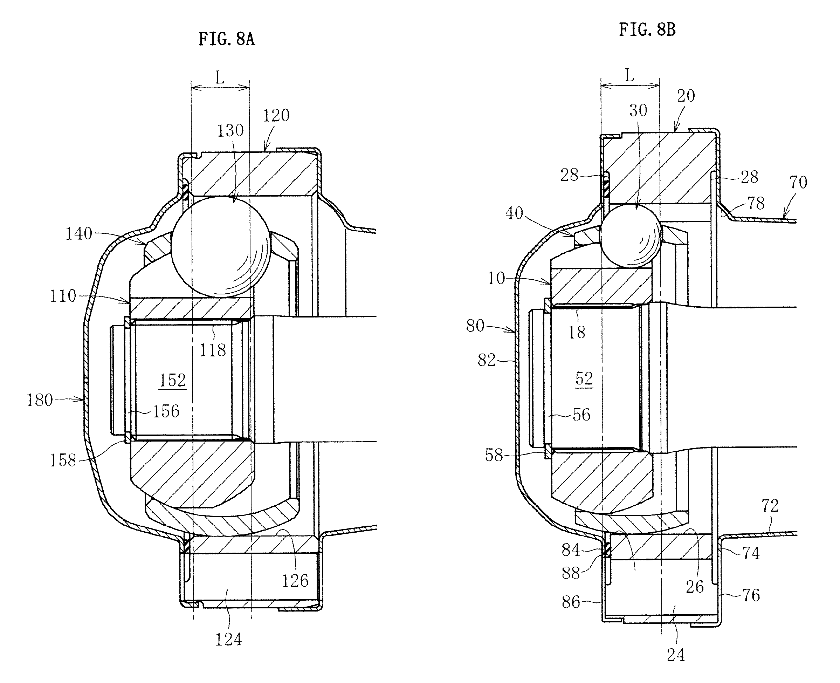

Fig. 8A corresponds to Fig. 9 which illustrates the conventional example and Fig. 8B corresponds to Fig. 2 which illustrates the embodiment, in each of which the slidein state with the same stroke L is shown.

While the case of the invention applied to the propeller shaft has been described by way of example, the invention is also applicable to the drive shaft. That is, the propeller shaft and the drive shaft are common in that the shafts are composed of an intermediate shaft and the constant-velocity universal joint attached to both ends thereof. There is thus no substantial difference therebetween in implementing the invention.

### DESCRIPTION OF REFERENCE NUMERALS

- 10: inner ring (inner joint member)
12a, 12b ball groove
14 cylindrical portion
16a, 16b spherical portion
18 spline hole
- 20: outer ring (outer joint member)
22a, 22b ball groove
24 through hole
26 inner circumferential surface
28 recessed portion
29 reduced-diameter shoulder portion
- 30: ball
- 40: cage
42 pocket
44 cylindrical portion
46a, 46b spherical portion
48 outer circumferential surface
- 50: shaft
52 splined shaft
54 boot groove
56 annular groove
58 retaining ring
- 60: boot
62 boot body
64 reduced-diameter end
66 increased-diameter end
68 boot band
- 70: boot adapter
72 cylindrical portion
74 flange portion
76 through hole
- 78: concave spherical portion
- 80: end plate
82 projected portion
84 flange portion
86 through hole
88 packing

## Claims

1. A cross groove-type constant-velocity universal joint comprising: an inner ring having an outer circumferential surface on which ball grooves tilted in mutually opposite directions with respect to an axial line are formed alternately in the circumferential direction; an outer ring having an inner circumferential surface on which ball grooves tilted in mutually opposite directions with respect to the axial line are formed alternately in the circumferential direction; a ball incorporated in an intersection of a pair of the ball groove of the inner ring and the ball groove of the outer ring; and a cage interposed between the inner ring and the outer ring to retain the ball on a same plane, wherein: a maximum diameter of the outer circumferential surface of the inner ring is greater than a minimum diameter of the inner circumferential surface of the cage; both end portions of the outer circumferential surface of the inner ring in a direction of width are provided with spherical portions which have a center of curvature at positions offset by a predetermined distance across the center of width of the inner ring; and the inner circumferential surface of the cage is provided with a cylindrical portion at a central portion in the direction of width and spherical portions at both end portions, the spherical portions having a center of curvature at positions offset outwardly by a predetermined distance from the center of width of the cage.

2. A cross groove-type constant-velocity universal joint according to claim 1, wherein the number of balls is 10.

3. A cross groove-type constant-velocity universal joint according to claim 1, wherein the number of balls is 8.

4. A cross groove-type constant-velocity universal joint according to claim 1, wherein the number of balls is 6.

5. A cross groove-type constant-velocity universal joint according to claim 2, wherein an intersection angle of the ball groove is 4° to 10°.

6. A cross groove-type constant-velocity universal joint according to claim 3, wherein an intersection angle of the ball groove is 6° to 15°.

7. A cross groove-type constant-velocity universal joint according to claim 4, wherein an intersection angle of the ball groove is 8° to 20°.

8. A cross groove-type constant-velocity universal joint according to any one of claims 1 to 7, used for a propeller shaft of an automobile.

9. A cross groove-type constant-velocity universal joint according to any one of claims 1 to 7, used for a drive shaft of an automobile.
